# FASCICULE DE BREVET EUROPEEN

(11) **EP 4 203 234 B1**
(45) Date de publication et mention de la délivrance du brevet: **29.05.2024**
(21) Numéro de dépôt: 22215636.6
(22) Date de dépôt: 21.12.2022
(51) Int. Cl.: H02J 7/00

(54) **SYSTÈME DE STOCKAGE D ÉNERGIE**
ENERGIESPEICHERSYSTEM
ENERGY STORAGE SYSTEM

(30) Priorité: 22.12.2021 FR 2114249
(43) Date de publication de la demande: 28.06.2023
(73) Titulaire: Commissariat à l'énergie atomique et aux énergies alternatives, 75015 Paris (FR)
(72) Inventeur: MARTIN, Jérémy, 38054 GRENOBLE CEDEX 09 (FR)
(74) Mandataire: Lavoix

(56) Documents cités:
- WO-A1-2018/220115
- FR-A1- 2 976 085
- FR-A1- 2 995 083
- FR-A3- 3 020 902

## Description

La présente invention concerne un système de stockage d'énergie.

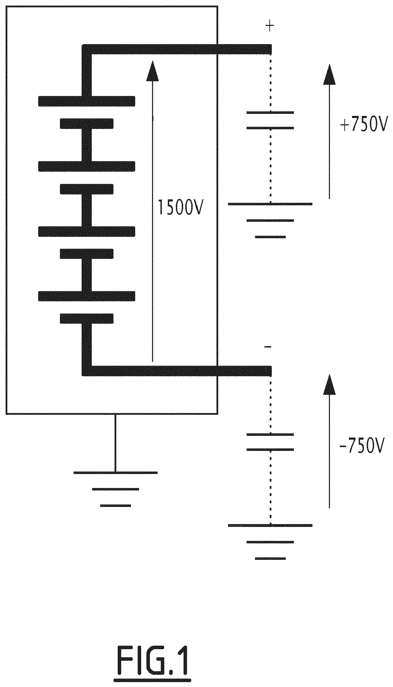

Les systèmes de stockage d'énergie du commerce sont majoritairement des systèmes basse tension comprenant plusieurs batteries mises en série pour former un bloc de batteries. La tension aux bornes d'un système de stockage d'énergie est la différence de potentiel entre la borne positive et la borne négative du système. En particulier, la figure 1 illustre un exemple d'un système de stockage d'énergie basse tension délivrant une tension maximale autour de 1500 Volts (V).

Le bloc de batteries de tels systèmes est supporté par un châssis connecté à la terre (aussi appelée masse ou référence 0 Volts). Pour respecter des contraintes d'isolement, il convient que la tension entre, d'une part, la borne positive et la terre, et d'autre part, entre la borne négative et la terre, soit très inférieure à la tension d'isolement du système. La tension d'isolement est généralement définie en valeur efficace pour une minute (RMS - 1 minute) comme étant égale à deux fois la tension maximale plus 1000 V. Dans le cas de la figure 1, la tension d'isolement est de 4000 Volts, la tension entre la borne positive et la terre est alors de +750 Volts, et la tension entre la borne négative et la terre de -750 Volts. Ainsi, même en présence d'un court-circuit sur l'une des bornes, la valeur absolue de la tension entre l'autre borne et la terre est au plus de 1500 Volts et reste très inférieure à la tension d'isolement de 4000 Volts.

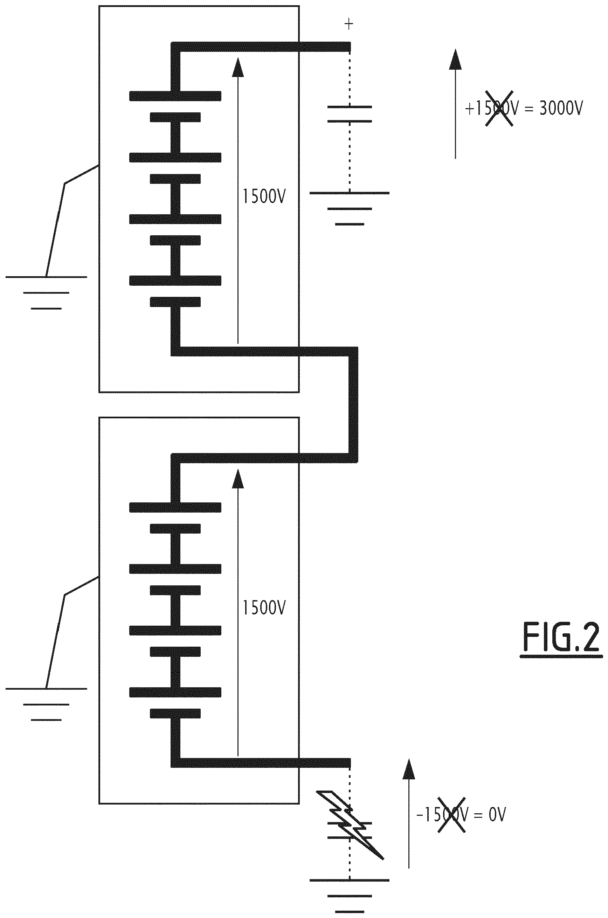

Si l'on cherche à effectuer une montée en tension de tels systèmes de stockage d'énergie (augmentation de la tension entre la borne positive et la borne négative du système), il est naturel de raccorder plusieurs systèmes de stockage en série, c'est-à-dire plusieurs blocs de batteries en série. Une telle configuration est illustrée par la figure 2 sur laquelle deux blocs de batteries correspondant à celui de la figure 1 ont été raccordés en série. La tension maximale atteinte pour le système est alors de 3000 Volts.

Néanmoins, en fonctionnement normal, la tension entre chacune des bornes du système et la terre atteint la tension maximale, soit 1500 Volts pour la configuration de la figure 2. Aussi, en présence d'un court-circuit sur l'une des bornes, la valeur absolue de la tension entre l'autre borne et la terre atteint la tension maximale, soit 3000 Volts pour la figure 2, et dépasse ainsi la tension pour laquelle l'isolement a été prévu pour un système à un seul bloc.

Le document FR 3 020 902 A décrit un exemple de dispositif de stockage d'énergie délivrant une tension utile entre deux phases. Le document WO 2018/220115 A porte sur un procédé et un système pour diagnostiquer en temps réel l'état de fonctionnement d'un système électrochimique comprenant un empilement de cellules.

Il existe donc un besoin pour un système de stockage d'énergie réalisant une montée en tension de systèmes de stockage du commerce tout en respectant les contraintes d'isolement.

A cet effet, la présente description a pour objet un système de stockage d'énergie comprenant plusieurs blocs de modules électriques raccordés en série, chaque bloc de modules électriques ayant une borne positive et une borne négative, la tension aux bornes de chaque bloc de modules électriques étant égale à la différence de potentiel entre la borne positive et la borne négative du bloc, la tension aux bornes du système étant égale à la somme des tensions des blocs de modules électriques raccordés, chaque bloc de batterie étant supporté par un châssis, chaque châssis étant mis à un potentiel de référence, le potentiel de référence de chaque châssis étant compris au sens large entre le potentiel de la borne positive et le potentiel de la borne négative du bloc de modules électriques supporté par le châssis.

Suivant des modes de réalisation particuliers, le système comprend une ou plusieurs des caractéristiques suivantes, prise(s) isolément ou suivant toutes les combinaisons techniquement possibles :
- chaque module électrique est une batterie ;
- chaque module électrique est un module électrolyseur ou un module de pile à combustible ;
- la valeur absolue de la différence de potentiel entre, d'une part, le potentiel de chaque borne de chaque bloc et, d'autre part, le potentiel du châssis supportant le bloc, est égale à 0 Volts ou à la tension aux bornes du bloc ;
- le potentiel de référence d'au moins l'un des châssis est différent du potentiel de la terre ;
- chaque châssis comprend un blindage conducteur sur lequel est appliqué le potentiel de référence ;
- chaque châssis comprend une borne additionnelle sur laquelle est appliquée une tension correspondant au potentiel de référence pour la mise du châssis au potentiel de référence ;
- chaque châssis est connecté au pôle positif ou au pôle négatif du bloc de modules électriques correspondant pour la mise du châssis au potentiel de référence ;
- le système comprend une carcasse encapsulant la pluralité de blocs de modules électriques ;
- la carcasse est en plastique ;
- la carcasse est métallique et reliée à la terre, la carcasse étant en outre raccordée à chaque châssis par au moins un isolateur ;
- les tensions aux bornes des blocs de modules électriques sont identiques, par exemple égales à 1500 Volts ;
- la tension aux bornes du système est strictement supérieure à 1500 Volts, de préférence supérieure ou égale à 3000 Volts. D'autres caractéristiques et avantages de l'invention apparaîtront à la lecture de la description qui suit de modes de réalisation de l'invention, donnés à titre d'exemple uniquement et en référence aux dessins qui sont :
   [Fig 1], Figure 1, une vue schématique d'un exemple d'un système de stockage d'énergie de l'état de la technique formé d'un bloc de batteries,
   [Fig 2], Figure 2, une vue schématique d'un exemple d'un système de stockage d'énergie effectuant une montée en tension par raccordement de deux blocs de batteries de la figure 1, les problématiques relatives à un tel système ayant été exposées dans la partie introductive de la description,
   [Fig 3], Figure 3, un exemple d'un système de stockage d'énergie permettant de résoudre la problématique exposée dans la partie introductive de la description, [Fig 4], Figure 4, un autre exemple d'un système de stockage d'énergie permettant de résoudre la problématique exposée dans la partie introductive de la description, et
   [Fig 5], Figure 5, encore un autre exemple d'un système de stockage d'énergie permettant de résoudre la problématique exposée dans la partie introductive de la description.

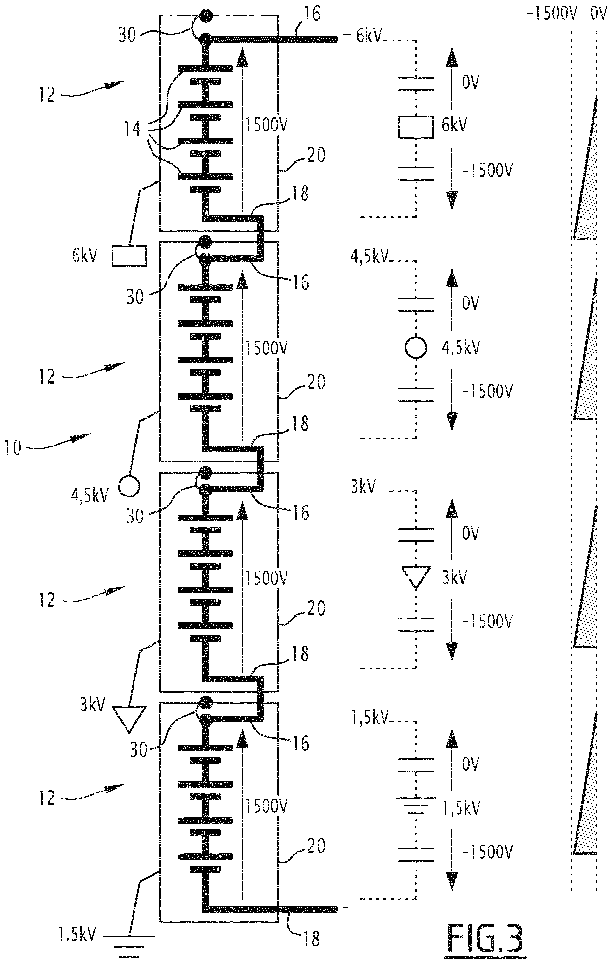

Un système 10 de stockage d'énergie permettant de réaliser une montée en tension par rapport aux systèmes de stockage du commerce décrits en introduction, tout en respectant les contraintes d'isolement est décrit dans ce qui suit. Les figures 3 à 5 sont des exemples d'un tel système 10, et seront détaillées en temps utile dans la description.

Le système 10 est notamment destiné à être intégré dans des installations réalisant une action de stockage d'énergie, tels que des centrales solaires photovoltaïques.

Le système 10 comprend plusieurs blocs 12 de batteries raccordés en série. Le raccordement est typiquement réalisé en joignant entre elles la borne positive d'un bloc 12 avec la borne négative d'un autre bloc 12, et ainsi de suite en fonction du nombre de blocs 12.

Par plusieurs blocs 12, il est entendu qu'au moins deux blocs 12 de batteries sont raccordés en série. Dans les exemples des figures 3 à 5, quatre blocs 12 de batteries sont raccordés en série. Le nombre de blocs 12 raccordés en série n'est néanmoins pas limité à quatre, et est supérieur ou inférieur à quatre en fonction de la tension finale visée.

Chaque bloc 12 de batteries est typiquement un bloc de batteries basse tension, tel qu'un bloc de batteries standard vendu dans le commerce. Par exemple, la tension maximale aux bornes d'un tel bloc de batteries est inférieure ou égale à 1500 Volts.

Chaque bloc 12 de batteries est formé de plusieurs batteries 14 connectées en série (représentées seulement sur l'un des blocs 12 des figures 3 à 5 pour ne pas surcharger les figures). Les batteries sont, par exemple, des batteries lithium-ion.

Chaque bloc 12 de batteries présente une borne positive et une borne négative, formant respectivement des bornes intermédiaires positives 16 et négatives 18 du système de stockage 10. La tension aux bornes de chaque bloc 12 de batteries est égale à la différence de potentiel entre la borne positive et la borne négative du bloc 12. Dans les exemples des figures 3 à 5, la tension aux bornes de chaque bloc 12 est de 1500 Volts.

Les blocs 12 de batteries sont typiquement raccordés les uns aux autres selon un ordre de raccordement. La borne négative du premier bloc 12 de batteries selon l'ordre de raccordement est la borne négative du système 10. La borne positive du dernier bloc 12 de batteries selon l'ordre de raccordement est la borne positive du système 10. La tension aux bornes du système 10 de stockage est, ainsi, égale à la somme des tensions des blocs 12 de batteries raccordés. Ainsi, la tension aux bornes du système 10 est typiquement strictement supérieure à 1500 Volts, de préférence supérieure ou égale à 3000 Volts. Dans les exemples des figures 3 à 5, quatre blocs 12 de batteries de 1500 Volts sont raccordés en série, la tension du système 10 est donc de 6000 Volts. Le raccordement est effectué depuis le bloc 12 le plus en bas sur les figures vers le bloc 12 le plus en haut sur les figures.

Chaque bloc 12 de batteries est supporté par un châssis 20, aussi appelé support ou rack.

Chaque châssis 20 est mis à un potentiel de référence. Le potentiel de référence de chaque châssis 20 est compris au sens large entre le potentiel de la borne positive et le potentiel de la borne négative du bloc 12 de batteries correspondant. Ainsi, la mise au potentiel du châssis 20 est, par exemple, réalisée par une connexion du châssis 20 à l'une des batteries contenues dans le bloc 12.

Dans un mode préféré de mise en oeuvre, le potentiel de référence de chaque châssis 20 est égal au potentiel de la borne positive ou de la borne négative du bloc 12 de batteries correspondant. Cela permet de faciliter la conception du système de stockage 10.

Ainsi, dans ce mode préféré, en fonctionnement normal (c'est-à-dire en l'absence de court-circuit), la différence de potentiel (tension) entre, d'une part, le potentiel de la borne de chaque bloc 12 qui est égal au potentiel de référence, et d'autre part le potentiel de référence correspondant, est nulle. En outre, la valeur absolue de la différence de potentiel entre le potentiel de l'autre borne de chaque bloc 12 et le potentiel de référence est égale à la tension du bloc 12. Aussi, même en présence d'un court-circuit sur l'une des bornes du système 10, la valeur absolue de la tension entre l'autre borne et le potentiel de référence du bloc 12 est au plus égale à la tension du bloc 12, ce qui reste conforme à la tension d'isolement.

Dans les exemples des figures 3 à 5, le potentiel de référence de chaque châssis 20 est égal au potentiel de la borne positive du bloc 12 supporté par le châssis 20, soit 1500 V pour le premier châssis 20, 3000 V pour le deuxième châssis 20, 4500 V pour le troisième châssis 20 et 6000 V pour le quatrième châssis 20. Ainsi, la différence de potentiel entre la borne positive de chaque bloc 12 et le potentiel de référence correspondant est égale à 0 V. La différence de potentiel entre la borne négative de chaque bloc 12 et le potentiel de référence correspondant est égale à -1500 V (1500 V étant la tension du bloc).

Il est à noter que dans ces exemples, si le potentiel de référence de chaque châssis 20 avait été celui de la borne négative du bloc 12 correspondant, la différence de potentiel entre la borne positive de chaque bloc 12 et le potentiel de référence correspondant serait égale à +1500 V. La différence de potentiel entre la borne négative de chaque bloc 12 et le potentiel de référence correspondant serait égale à 0 V.

De manière générale, étant donné que le système 10 comprend au moins deux blocs 12 de batteries raccordés en série, le châssis 20 de l'un des blocs 12 est mis à un potentiel de référence qui est différent du potentiel de la terre (c'est-à-dire du potentiel 0 V). Le potentiel de référence des châssis 20 est donc croissant au fur et à mesure des raccordements de blocs 12.

Avantageusement, chaque châssis 20 comprend un blindage conducteur sur lequel est appliqué le potentiel de référence.

Dans un exemple de mise en oeuvre, chaque châssis 20 comprend une borne additionnelle sur laquelle est appliquée une tension correspondant au potentiel de référence pour la mise du châssis 20 au potentiel de référence. La borne additionnelle fait par exemple saillie à partir du châssis 20.

Dans un autre exemple de mise en oeuvre, chaque châssis 20 est connecté au pôle positif ou au pôle négatif du bloc 12 de batteries correspondant pour la mise du châssis 20 au potentiel de référence. La connexion est, par exemple, réalisée par une connectique 30 de mise au potentiel, telle qu'une tresse métallique. Une telle connectique 30 est illustrée sur les figures 3 à 5.

Optionnellement, le système 10 comprend une carcasse 40 encapsulant la pluralité de blocs 12 de batteries. La carcasse 40 est propre à protéger les blocs 12 de batteries, et permet l'obtention d'un système 10 sans pièces nues sous tension.

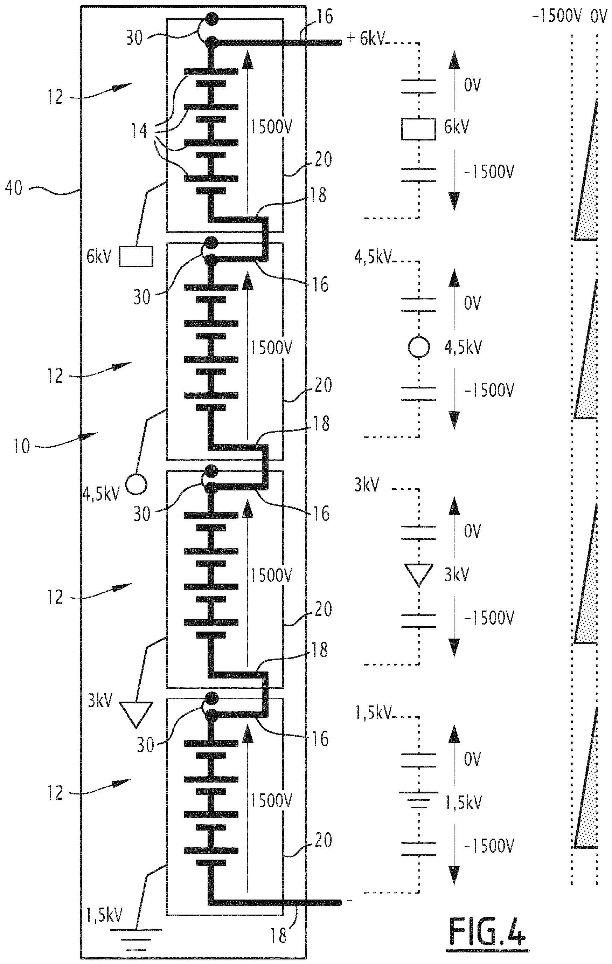

Dans l'exemple de la figure 4, la carcasse 40 est en matière plastique.

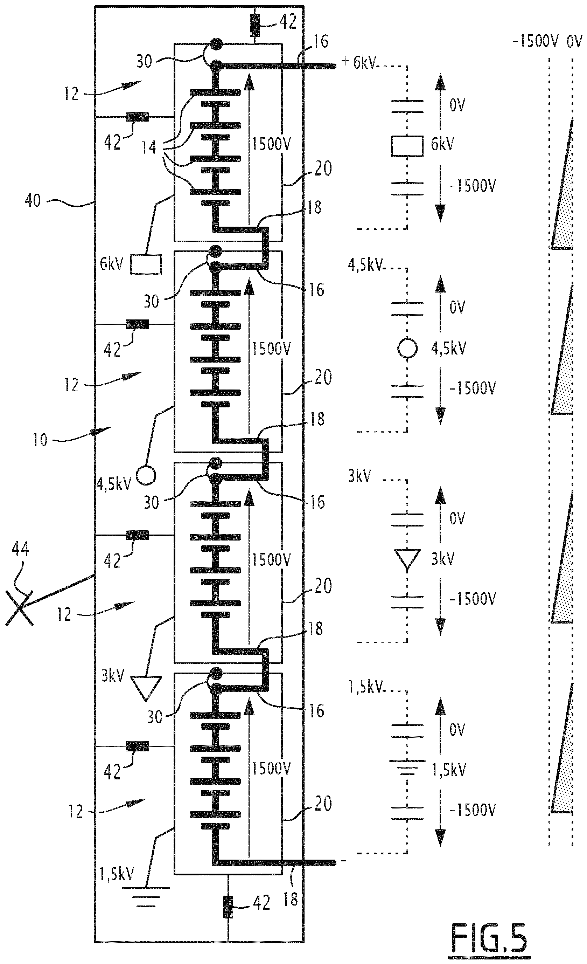

Dans l'exemple de la figure 5, la carcasse 40 est métallique et est raccordée à chaque châssis 20 par au moins un isolateur 42. La carcasse 40 est dans ce cas reliée à la terre 44. Un isolateur est un composant électrotechnique formé d'un matériau isolant. Une carcasse métallique présente l'avantage d'être plus résistante qu'une carcasse plastique.

Un exemple de conception du système 10 va maintenant être décrit.

Initialement, il est obtenu plusieurs (au moins deux) blocs 12 de batteries à raccorder, chaque bloc 12 étant supporté par un châssis 20.

L'un des blocs 12 est pris comme premier bloc pour le raccordement. Le potentiel de référence du châssis 20 du premier bloc 12 est alors fixé à un potentiel compris au sens large entre le potentiel de la borne positive et le potentiel de la borne négative du premier bloc 12. De préférence, le potentiel de référence du châssis 20 du premier bloc 12 est égal au potentiel de la borne positive ou au potentiel de la borne négative du premier bloc 12.

Ensuite, un deuxième bloc 12 est raccordé au premier bloc 12, par exemple en connectant la borne négative du deuxième bloc 12 à la borne positive du premier bloc 12. Le potentiel de référence du châssis 20 du deuxième bloc 12 est alors fixé à un potentiel compris au sens large entre le potentiel de la borne positive et le potentiel de la borne négative du deuxième bloc 12. De préférence, le potentiel de référence du châssis 20 du deuxième bloc 12 est égal au potentiel de la borne positive ou au potentiel de la borne négative du deuxième bloc 12. L'opération est ensuite répétée pour chaque autre bloc 12 à raccorder.

Ainsi, le système 10 de stockage d'énergie permet de réaliser une montée en tension à partir de systèmes de stockage basse tension tels que ceux du commerce, tout en respectant les contraintes d'isolement mais sans toutefois introduire une isolation renforcée. En effet, l'isolation est supportée par le châssis 20 de chaque bloc de batteries. Notamment, la fixation des potentiels des châssis 20 en fonction du bloc correspondant (potentiel compris au sens large entre les potentiels des bornes positive et négative) permet de ne pas dépasser la tension d'isolement même en cas de court-circuit.

Un tel système 10 permet, en outre, d'éliminer les potentiels de mode commun positif. La maintenance est également facilitée (mise au potentiel des masses).

L'homme du métier comprendra que les modes de réalisation et variantes précédemment décrits peuvent être combinés pour former de nouveaux modes de réalisation pourvu qu'ils soient compatibles techniquement.

Il est à noter que dans l'exemple des figures 3 à 5, les tensions aux bornes des blocs 12 de batteries sont identiques (égales à 1500 Volts). Néanmoins, la présente invention s'applique également au cas de blocs 12 de batteries de tensions différentes, par exemple pour un raccordement d'un bloc 12 de batteries ayant une tension maximale autour de 1500 V avec un bloc 12 de batteries ayant une tension maximale autour de 500 V.

En complément, il est souligné que l'invention a été décrite en prenant comme exemple des blocs de batteries. Néanmoins, le principe de l'invention s'applique à tous types de modules électriques, et notamment aussi à des modules électrolyseurs ou des modules de piles à combustibles. En effet, dans le cas de réacteurs électrochimiques comme des électrolyseurs ou des piles à combustibles, des mises en séries importantes de composants peuvent générer des problématiques de sécurité et d'isolation, ce que le système de stockage proposé permet de résoudre. La présente description peut donc se lire en remplaçant le terme « batterie » par le terme « module électrique », et plus particulièrement « module électrolyseur » ou « module de pile à combustible ».

## Revendications

1. Système (10) de stockage d'énergie comprenant plusieurs blocs (12) de modules électriques raccordés en série, chaque bloc (12) de modules électriques ayant une borne positive et une borne négative, la tension aux bornes de chaque bloc (12) de modules électriques étant égale à la différence de potentiel entre la borne positive et la borne négative du bloc (12), la tension aux bornes du système (10) étant égale à la somme des tensions des blocs (12) de modules électriques raccordés, chaque bloc (12) de modules électriques étant supporté par un châssis (20), chaque châssis (20) étant mis à un potentiel de référence,
**caractérisé en ce que** le potentiel de référence de chaque châssis (20) est compris au sens large entre le potentiel de la borne positive et le potentiel de la borne négative du bloc (12) de modules électriques supporté par le châssis.

2. Système (10) selon la revendication 1, dans lequel chaque module électrique est une batterie.

3. Système (10) selon la revendication 1, dans lequel chaque module électrique est un module électrolyseur ou un module de pile à combustible.

4. Système (10) selon l'une quelconque des revendications 1 à 3, dans lequel la valeur absolue de la différence de potentiel entre, d'une part, le potentiel de chaque borne de chaque bloc (12) et, d'autre part, le potentiel du châssis supportant le bloc (12), est égale à 0 Volts ou à la tension aux bornes du bloc (12).

5. Système (10) selon l'une quelconque des revendications 1 à 4, dans lequel le potentiel de référence d'au moins l'un des châssis (20) est différent du potentiel de la terre.

6. Système (10) selon l'une quelconque des revendications 1 à 5, dans lequel chaque châssis (20) comprend un blindage conducteur sur lequel est appliqué le potentiel de référence.

7. Système (10) selon l'une quelconque des revendications 1 à 6, dans lequel chaque châssis (20) comprend une borne additionnelle sur laquelle est appliquée une tension correspondant au potentiel de référence pour la mise du châssis (20) au potentiel de référence.

8. Système (10) selon l'une quelconque des revendications 1 à 6, dans lequel chaque châssis (20) est connecté au pôle positif ou au pôle négatif du bloc (12) de modules électriques correspondant pour la mise du châssis (20) au potentiel de référence.

9. Système (10) selon l'une quelconque des revendications 1 à 8, dans lequel le système (10) comprend une carcasse (40) encapsulant la pluralité de blocs (12) de modules électriques.

10. Système (10) selon la revendication 9, dans lequel la carcasse (40) est en plastique.

11. Système (10) selon la revendication 9, dans lequel la carcasse (40) est métallique et reliée à la terre (44), la carcasse (40) étant en outre raccordée à chaque châssis (20) par au moins un isolateur (42).

12. Système (10) selon l'une quelconque des revendications 1 à 11, dans lequel les tensions aux bornes des blocs (12) de modules électriques sont identiques, par exemple égales à 1500 Volts.

13. Système (10) selon l'une quelconque des revendications 1 à 12, dans lequel la tension aux bornes du système (10) est strictement supérieure à 1500 Volts, de préférence supérieure ou égale à 3000 Volts.

## Patentansprüche

1. Energiespeichersystem (10), umfassend mehrere in Reihe geschaltete Blöcke (12) elektrischer Module, wobei jeder Block (12) elektrischer Module einen positiven Anschluss und einen negativen Anschluss aufweist, wobei die Spannung an jedem Block (12) elektrischer Module gleich wie die Potenzialdifferenz zwischen dem positiven Anschluss und dem negativen Anschluss des Blocks (12) ist, wobei die Spannung an den Anschlüssen des Systems (10) gleich wie die Summe der Spannungen der angeschlossenen Blöcke (12) elektrischer Module ist, wobei jeder Block (12) elektrischer Module von einem Rahmen (20) getragen wird, wobei jeder Rahmen (20) auf ein Bezugspotential gesetzt ist,
**dadurch gekennzeichnet, dass** das Bezugspotential von jedem Rahmen (20) im weiteren Sinne zwischen dem Potential des positiven Anschlusses und dem Potential des negativen Anschlusses des Blocks (12) elektrischer Module ist, der von dem Rahmen getragen wird.

2. System (10) nach Anspruch 1, wobei jedes elektrische Modul eine Batterie ist.

3. System (10) nach Anspruch 1, wobei jedes elektrische Modul ein Elektrolysemodul oder ein Brennstoffzellenmodul ist.

4. System (10) nach einem der Ansprüche 1 bis 3, wobei der Absolutwert der Potenzialdifferenz zwischen einerseits dem Potenzial von jedem Anschluss von jedem Block (12) und andererseits dem Potenzial des Rahmens, der den Block (12) trägt, gleich 0 Volt oder wie die Spannung an den Anschlüssen des Blocks (12) ist.

5. System (10) nach einem der Ansprüche 1 bis 4, wobei sich das Bezugspotenzial von mindestens einem der Rahmen (20) von dem Potenzial der Erde unterscheidet.

6. System (10) nach einem der Ansprüche 1 bis 5, wobei jeder Rahmen (20) eine leitende Abschirmung umfasst, an die das Bezugspotenzial angelegt ist.

7. System (10) nach einem der Ansprüche 1 bis 6, wobei jeder Rahmen (20) einen zusätzlichen Anschluss umfasst, an den eine Spannung angelegt wird, die dem Bezugspotenzial entspricht, um den Rahmen (20) auf das Bezugspotenzial zu bringen.

8. System (10) nach einem der Ansprüche 1 bis 6, wobei jeder Rahmen (20) mit dem positiven Pol oder dem negativen Pol des entsprechenden Blocks (12) elektrischer Module verbunden ist, um den Rahmen (20) auf Bezugspotenzial zu bringen.

9. System (10) nach einem der Ansprüche 1 bis 8, wobei das System (10) ein Gehäuse (40) umfasst, das die Vielzahl von Blöcken (12) elektrischer Module einkapselt.

10. System (10) nach Anspruch 9, wobei das Gehäuse (40) aus Kunststoff ist.

11. System (10) nach Anspruch 9, wobei das Gehäuse (40) metallisch und geerdet (44) ist, wobei das Gehäuse (40) ferner mittels mindestens eines Isolators (42) mit jedem Rahmen (20) verbunden ist.

12. System (10) nach einem der Ansprüche 1 bis 11, wobei die Spannungen an den Blöcken (12) der elektrischen Module gleich sind, z. B. gleich wie 1500 Volt.

13. System (10) nach einem der Ansprüche 1 bis 12, wobei die Spannung an den Anschlüssen des Systems (10) strikt größer als 1500 Volt, vorzugsweise größer als oder gleich wie 3000 Volt, ist.

## Claims

1. Energy storage system (10) comprising a plurality of electrical module packs (12) connected in series, each electrical module pack (12) having a positive terminal and a negative terminal, the voltage at the terminals of each electrical module pack (12) being equal to the potential difference between the positive terminal and the negative terminal of the pack (12), the voltage at the terminals of the system (10) being equal to the sum of the voltages of the connected electrical module packs (12), each electrical module pack (12) being supported by a frame (20), each frame (20) being set at a reference potential, **characterized in that** the reference potential of each frame (20) is broadly comprised between the positive terminal potential and the negative terminal potential of the electrical module pack (12) supported by the frame.

2. System (10) according to claim 1, wherein each electrical module is a battery.

3. System (10) according to claim 1, wherein each electrical module is an electrolyser module or a fuel cell module.

4. System (10) according to any of claims 1 to 3, wherein the absolute value of the potential difference between, on the one hand, the potential of each terminal of each pack (12) and, on the other hand, the potential of the frame supporting the pack (12), is equal to 0 volts or to the voltage at the terminals of the pack (12).

5. System (10) according to any of claims 1 to 4, wherein the reference potential of at least one of the frames (20) is different from the ground potential.

6. System (10) according to any of claims 1 to 5, wherein each frame (20) comprises a conductive shield to which the reference potential is applied.

7. System (10) according to any of claims 1 to 6, wherein each frame (20) comprises an additional terminal to which a voltage corresponding to the reference potential is applied for setting the frame (20) to the reference potential.

8. System (10) according to any of claims 1 to 6, wherein each frame (20) is connected to the positive pole or negative pole of the corresponding electrical module pack (12) for setting the frame (20) to the reference potential.

9. System (10) according to any of claims 1 to 8, wherein the system (10) comprises a casing (40) encapsulating the plurality of electrical module packs (12).

10. System (10) according to claim 9, wherein the casing (40) is made of plastic.

11. System (10) according to claim 9, wherein the casing (40) is metallic and grounded (44), the casing (40) being further connected to each frame (20) by at least one insulator (42).

12. System (10) according to any of claims 1 to 11, wherein the voltages at the terminals of the packs (12) of electrical modules are identical, for example, equal to 1500 volts.

13. System (10) according to any of claims 1 to 12, wherein the voltage at the terminals of the system (10) is strictly greater than 1500 volts, preferably greater than or equal to 3000 volts.
